# EUROPÄISCHE PATENTSCHRIFT

(11) **EP 3 774 427 B1**
(45) Veröffentlichungstag und Bekanntmachung des Hinweises auf die Patenterteilung: **09.08.2023**
(21) Anmeldenummer: 19717412.1
(22) Anmeldetag: 03.04.2019
(51) Int. Cl.: B60K 6/445, B60K 6/365, B60K 6/387, B60K 17/28, F16H 3/72, B60K 6/38

(54) **GETRIEBEANORDNUNG FÜR EIN HYBRIDFAHRZEUG UND VERFAHREN ZUM BETREIBEN EINES HYBRIDFAHRZEUGES**
TRANSMISSION ARRANGEMENT FOR A MOTOR VEHICLE AND METHOD FOR OPERATING A HYBRID VEHICLE
SYSTÈME DE TRANSMISSION POUR UN VÉHICULE HYBRIDE ET PROCÉDÉ POUR FAIRE FONCTIONNER UN VÉHICULE HYBRIDE

(30) Priorität: 04.04.2018 AT 502782018
(43) Veröffentlichungstag der Anmeldung: 17.02.2021
(73) Patentinhaber: AVL List GmbH, 8020 Graz (AT)
(72) Erfinder: WIENER, Herbert, 3250 WIESELBURG (AT); SCHÖRGHUBER, Christoph, 3352 ST. PETER/AU (AT)
(74) Vertreter: Babeluk, Michael
(86) Internationale Anmeldenummer: PCT/AT2019/060114
(87) Internationale Veröffentlichungsnummer: WO 2019/191797

(56) Entgegenhaltungen:
- DE-A1-102017 117 336
- DE-B4-112007 002 558
- JP-A- 2009 120 043
- JP-A- 2010 284 997
- JP-A- 2014 211 213
- US-A1- 2017 066 436

## Beschreibung

Die Erfindung betrifft eine Getriebeanordnung für ein Hybridfahrzeug, mit einem Gehäuse, mit einer Getriebeeingangswelle und zumindest einer Getriebeausgangswelle, mit einem ersten Planetengetriebesatz mit einem ersten Sonnenrad, einem ersten Hohlrad und einem ersten Planetenträger für einen mit dem ersten Sonnenrad und dem ersten Hohlrad im Zahneingriff stehenden ersten Planetenradsatz, mit einem zweiten Planetengetriebesatz mit einem zweiten Sonnenrad, einem zweiten Hohlrad und einem zweiten Planetenträger für einen mit dem zweiten Sonnenrad und dem zweiten Hohlrad im Zahneingriff stehenden zweiten Planetenradsatz, wobei die Getriebeeingangswelle mit dem ersten Planetenträger drehfest verbunden oder verbindbar ist und das erste und zweite Hohlrad permanent miteinander und mit der Getriebeausgangswelle drehfest verbunden sind, mit einer ersten elektrischen Maschine und einer zweiten elektrischen Maschine, wobei die erste elektrische Maschine permanent mit dem ersten Sonnenrad antriebsverbunden und die zweite elektrische Maschine in zumindest einem Betriebsmodus mit dem zweiten Sonnenrad antriebsverbunden ist, und wobei das erste Sonnenrad über ein erstes Schaltelement mit dem Gehäuse verbindbar ist, wobei der zweite Planetenträger fest mit dem Gehäuse verbunden ist und die zweite elektrische Maschine mit dem zweiten Sonnenrad antriebsverbunden oder antriebsverbindbar ist.

Weiters betrifft die Erfindung ein Verfahren zum Betreiben eines Hybridfahrzeuges mit einer Getriebeanordnung der genannten Art.

Aus der DE 10 2013 113 344 A1 ist ein Leistungsübertragungssystem für ein Hybrid-Elektrofahrzeug mit einem ersten und einem zweiten Planetengetriebesatz bekannt, von denen einer als Minusgetriebe und der andere als Plusgetriebe ausgebildet ist. Dabei sind eine erste elektrische Maschine und eine zweite elektrische Maschine koaxial zur Getriebeeingangswelle angeordnet, wobei die erste elektrische Maschine fest mit dem Sonnenrad des ersten Planetengetriebesatzes und die zweite elektrische Maschine fest mit dem Sonnenrad des zweiten Planetengetriebesatzes verbunden ist. Die Planetenträger der beiden Planetengetriebesätze sind über eine Reibungskupplung miteinander drehverbindbar. Das Sonnenrad des ersten Planetengetriebesatzes kann über eine erste Reibungsbremse, und der Planetenträger des zweiten Planetengetriebesatzes über eine zweite Reibungsbremse festgehalten werden.

Die DE 10 2013 226 472 A1 beschreibt ein Kraftübertragungssystem für ein Hybridfahrzeug mit einem ersten Planetenradsatz und einem zweiten Planetenradsatz. Der Planetenträger des ersten Planetenradsatzes ist mit der Abtriebswelle einer Brennkraftmaschine verbunden. Die Hohlräder der beiden Planetenradsätze sind miteinander verbunden und wirken auf eine Antriebseinheit ein. Der Planetenträger des zweiten Planetenradsatzes ist über eine Bremse festhaltbar. Der Planetenträger des ersten Planetenradsatzes ist über eine Kupplung mit den Hohlrädern verbindbar. Weiters ist das Sonnenrad des ersten Planetenradsatzes mit einer ersten elektrischen Maschine und das Sonnenrad des zweiten Planetenradsatzes mit einer zweiten elektrischen Maschine verbunden.

Die DE 11 2007 002 558 B4 beschreibt eine in einem Getriebegehäuse angeordnete Leistungsabgabevorrichtung mit einer Brennkraftmaschine, einem ersten Motor, einem zweiten Motor, mit einem durch ein erstes Planetengetriebe gebildeten Leistungsverteilungsintegrationsmechanismus und einem durch ein zweites Planetengetriebe gebildeten Untersetzungsgetriebemechanismus. Weiters ist in dem Getriebegehäuse zwischen der Leistungsabgabevorrichtung und einer dem Antrieb der Antriebsräder dienenden Antriebswelle ein Getriebe angeordnet. Die Motoren und die Brennkraftmaschine sind über zwei gekoppelte Planetengetriebe miteinander verbunden. Der erste Elektromotor ist mit einem Sonnenrad des ersten Planetengetriebes verbindbar und der zweite Motor ist mit einem Sonnenrad des zweiten Planetengetriebes verbunden. Die Brennkraftmaschine ist mit dem Planetenträger des ersten Planetengetriebes verbunden. Die beiden Planetengetriebe sind über ein gemeinsames Hohlrad miteinander verbunden. Die Motorwelle des ersten Motors wirkt auf eine zweite Zahnradwelle, das gemeinsame Hohlrad der Planetengetriebe wirkt auf eine erste Zahnradwelle des Getriebes ein, wobei die Zahnradwellen über eine Kupplung entweder direkt oder über eine Getriebezwischenwelle mit der Antriebswelle verbindbar sind.

Ausgehend von einer Getriebeanordnung der eingangs genannten Art ist es die Aufgabe der Erfindung, auf möglichst einfache Weise und unter Beanspruchung von wenig Bauraum eine hohe Funktionalität mit vielen Betriebsmodi zu erreichen.

Erfindungsgemäß wird dies dadurch erreicht, dass
- in einem Notfall-Modus der Getriebeanordnung die Getriebeeingangswelle über ein Notfall-Schaltelement zusätzlich zu einer drehfesten Verbindung zum ersten Planetenträger mit dem ersten Sonnenrad antriebsverbindbar ist,
   oder dass
- in einem Notfall-Modus der Getriebeanordnung die Getriebeeingangswelle über ein Notfall-Schaltelement bei getrennter Verbindung zum ersten Planetenträger mit dem zweiten Sonnenrad antriebsverbindbar ist,
   oder dass
- in einem Notfall-Modus der Getriebeanordnung die Getriebeeingangswelle über ein Notfall-Schaltelement zusätzlich zu einer drehfesten Verbindung zum ersten Planetenträger wahlweise über eine erste Vorwärtsübersetzungsstufe mit dem zweiten Sonnenrad oder über eine Rückwärts-Übersetzungsstufe - welche die Drehrichtung umkehrt - mit dem zweiten Sonnenrad antriebsverbindbar ist.

Dadurch kann bei Ausfall beispielsweise der Steuerung für die elektrischen Maschinen eine sogenannte "Limp home" Funktion ermöglicht werden. Um im Falle einer Störung eine Weiterfahrt mit reduzierter Funktionalität zu ermöglichen, wird im Notfall-Modus die Getriebeeingangswelle mit dem ersten Sonnenrad oder dem zweiten Sonnenrad antriebsverbunden.

Vorzugsweise ist vorgesehen, dass die zweite elektrische Maschine über ein zweites Schaltelement - vorzugsweise wahlweise über eine erste oder zweite Übersetzungsstufe - mit dem zweiten Sonnenrad antriebsverbindbar ist.

In einer konstruktiv einfachen und kompakten Ausführung der Erfindung ist vorgesehen, dass sowohl der erste als auch der zweite Planetenradsatz als einfache Minusgetriebe ausgebildet sind.

Eine sehr platzsparende Bauweise wird ermöglicht, wenn die Getriebeausgangswelle koaxial zur Getriebeeingangswelle angeordnet ist.

Eine Ausführungsvariante der Erfindung sieht vor, dass die erste elektrische Maschine und die zweite elektrische Maschine achsversetzt und parallel zueinander, vorzugsweise auch achsversetzt in Bezug zur Getriebeeingangswelle und/oder Getriebeausgangswelle - angeordnet sind. Dies ermöglicht eine optimale Nutzung des zur Verfügung stehenden Bauraumes. Durch die Verwendung von kompakten elektrischen Maschinen mit hohen Drehzahlen kann der verbaute Raum reduziert und Kosten eingespart werden. Die elektrischen Maschinen können beispielsweise im Bereich einer Stirnseite der Getriebeanordnung vorgesehen werden, wodurch der Platz optimal ausgenutzt und kurz bauende Anordnungen realisiert werden können. Ein weiterer Vorteil ergibt sich durch die einfachere Montage.

In einer weiteren Ausführungsvariante ist vorgesehen, dass die Getriebeeingangswelle - vorzugsweise über eine Übersetzungsstufe - mit einer Nebenabtriebswelle antriebsverbunden oder antriebsverbindbar ist. Dies ermöglicht es, gegebenenfalls Zusatzaggregate oder externe Maschinen anzutreiben.

In weiteren Ausführungsvarianten ist vorgesehen, dass eine Nebenabtriebswelle über ein Schaltelement -vorzugsweise über eine Übersetzungsstufe - mit der Getriebeeingangswelle antriebsverbunden oder antriebsverbindbar ist oder - vorzugsweise über eine Übersetzungsstufe - mit der zweiten elektrischen Maschine antriebsverbunden oder antriebsverbindbar ist. Dies ermöglicht es, gegebenenfalls Zusatzaggregate oder externe Maschinen wahlweise mechanisch oder elektrisch anzutreiben.

Im Rahmen der Erfindung ist vorgesehen, dass in einem Overdrive-Modus des Hybridfahrzeuges die erste elektrische Maschine blockiert wird, wobei das erste Sonnenrad über ein erstes Schaltelement mit dem Gehäuse verbunden wird. Unter einem Overdrive-Modus wird ein Schongang der Getriebeanordnung verstanden, der eine Absenkung der für eine bestimmte Geschwindigkeit notwenigen Motordrehzahl bewirkt. Durch Ermöglichung des Overdrive-Modus kann der Kraftstoffverbrauch, die Emissionen, der Geräuschpegel, sowie die Belastung des Triebwerkes insbesondere bei Überlandfahrten des Hybridfahrzeuges wesentlich reduziert werden. Zur Minimierung der Verluste wird vorzugsweise im Overdrive-Modus die zweite elektrische Maschine über das zweite Schaltelement mechanisch vom Antriebsstrang getrennt.

Die Erfindung wird im Folgenden anhand der in den Figuren gezeigten nicht einschränkenden Ausführungsbeispielen näher erläutert. Darin zeigen schematisch:
- Fig. 1: eine erfindungsgemäße Getriebeanordnung in einer ersten Ausführung der Erfindung;
- Fig. 2: eine erfindungsgemäße Getriebeanordnung in einer zweiten Ausführung der Erfindung;
- Fig. 3: eine erfindungsgemäße Getriebeanordnung in einer dritten Ausführung der Erfindung;
- Fig. 4: eine erfindungsgemäße Getriebeanordnung in einer vierten Ausführung der Erfindung;
- Fig. 5: eine erfindungsgemäße Getriebeanordnung in einer fünften Ausführung der Erfindung;
- Fig. 6: eine erfindungsgemäße Getriebeanordnung in einer sechsten Ausführung der Erfindung;
- Fig. 7: eine erfindungsgemäße Getriebeanordnung in einer siebenten Ausführung der Erfindung; und
- Fig. 8: eine erfindungsgemäße Getriebeanordnung in einer achten Ausführung der Erfindung.

Funktionsgleiche Teile sind in den Ausführungsvarianten mit den gleichen Bezugszeichen versehen.

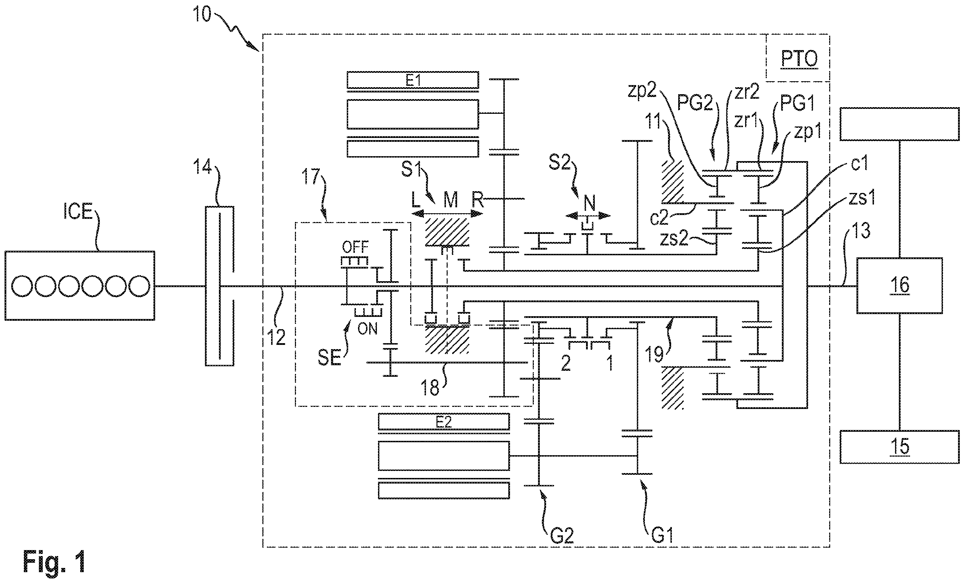

Die Fig. 1 bis Fig. 8 zeigen jeweils Getriebeanordnungen 10 für Hybridfahrzeuge.

Jede Getriebeanordnung 10 weist ein Gehäuse 11, eine Getriebeeingangswelle 12 und zumindest eine Getriebeausgangswelle 13 auf. Die Getriebeeingangswelle 12 kann über eine Schaltkupplung 14 mit einer Brennkraftmaschine ICE verbunden werden. Die Getriebeausgangswelle 13 dient zum Antrieb von Antriebsrädern 15 des Hybridfahrzeuges, wobei mit Bezugszeichen 16 ein Differential bezeichnet ist. Innerhalb des Gehäuses 11 ist ein erster Planetengetriebesatz PG1 und ein zweiter Planetengetriebesatz PG2 angeordnet, wobei die Planetengetriebesätze PG1, PG2 als einfache Minusgetriebe ausgebildet sind.

Der erste Planetengetriebesatz PG1 weist ein erstes Sonnenrad zs1, ein erstes Hohlrad zr1 und einen ersten Planetenträger c1 für einen mit dem ersten Sonnenrad zs1 und dem ersten Hohlrad zr1 im Zahneingriff stehenden ersten Planetenradsatz zp1 auf. Der zweite Planetengetriebesatz PG2 weist ein zweites Sonnenrad zs2, ein zweites Hohlrad zr2 und einen zweiten Planetenträger c2 für einen mit dem zweiten Sonnenrad zs2 und dem zweiten Hohlrad zr2 im Zahneingriff stehenden zweiten Planetenradsatz zp2 auf. Die beiden Hohlräder zr1, zr2 sind mehrstückig starr miteinander verbunden oder einstückig ausgeführt. Die Getriebeeingangswelle 12 ist mit dem ersten Planetenträger c1 drehfest verbunden. Das erste Hohlrad zr1 und das zweite Hohlrad zr2 sind permanent miteinander und mit der Getriebeausgangswelle 13 drehfest verbunden. Im Gehäuse 11 ist eine erste elektrische Maschine E1 und eine zweite elektrische Maschine E2 angeordnet, wobei die erste elektrische Maschine E1 permanent mit dem ersten Sonnenrad zs1 antriebsverbunden und die zweite elektrische Maschine E2 in zumindest einem Betriebsmodus der Getriebeanordnung 10 mit dem zweiten Sonnenrad zs2 antriebsverbunden ist. Der zweite Planetenträger c2 ist mit dem Gehäuse 11 verbunden.

Das erste Sonnenrad zs1 kann über ein erstes Schaltelement S1 mit dem Gehäuse 11 verbunden werden.

Die zweite elektrische Maschine E2 ist mit dem zweiten Sonnenrad zs2 antriebsverbunden oder kann in einigen Ausführungsvarianten über ein zweites Schaltelement S2 mit dem zweiten Sonnenrad zs2 antriebsverbunden werden.

Weiters weisen die in den Fig. 1, Fig. 2 und Fig. 7 gezeigten Getriebeanordnungen 10 jeweils eine Notfalleinrichtung 17 mit einem Notfall-Schaltelement SE auf, über welches die Getriebeeingangswelle 12 zur Verwirklichung einer "Limp Home"-Funktion über eine Zwischenwelle 18 gleichzeitig mit dem ersten Planetenträger c1-und mit dem ersten Sonnenrad zs1 antriebsverbunden werden kann.

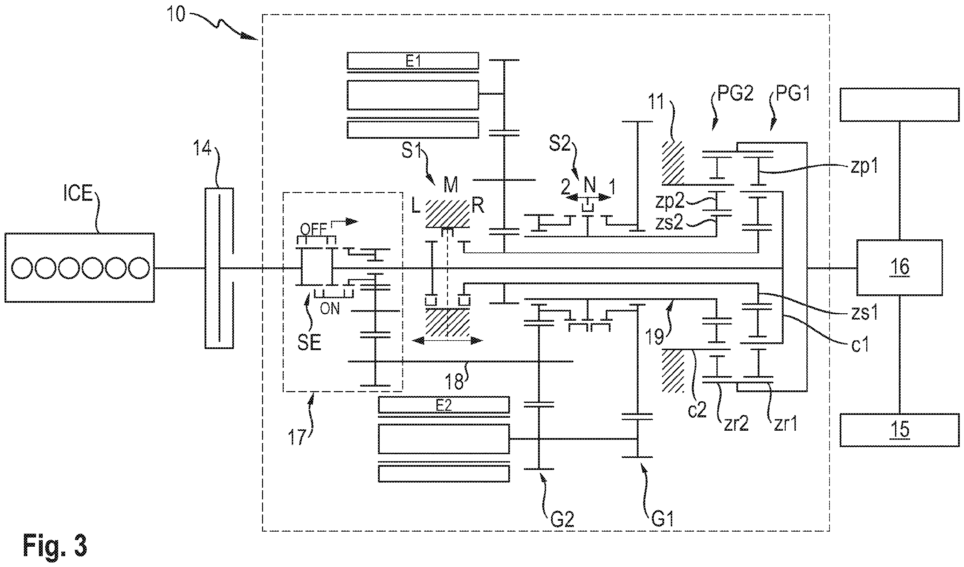

Weiters weisen die in den Fig. 3 bis Fig. 6 gezeigten Getriebeanordnungen 10 jeweils eine Notfalleinrichtung 17 mit einem Notfall-Schaltelement SE auf, über welches die Getriebeeingangswelle 12 zur Verwirklichung einer "Limp Home"- Funktion über eine Zwischenwelle 18 nur mit dem zweiten Sonnenrad zs2 antriebsverbunden werden kann.

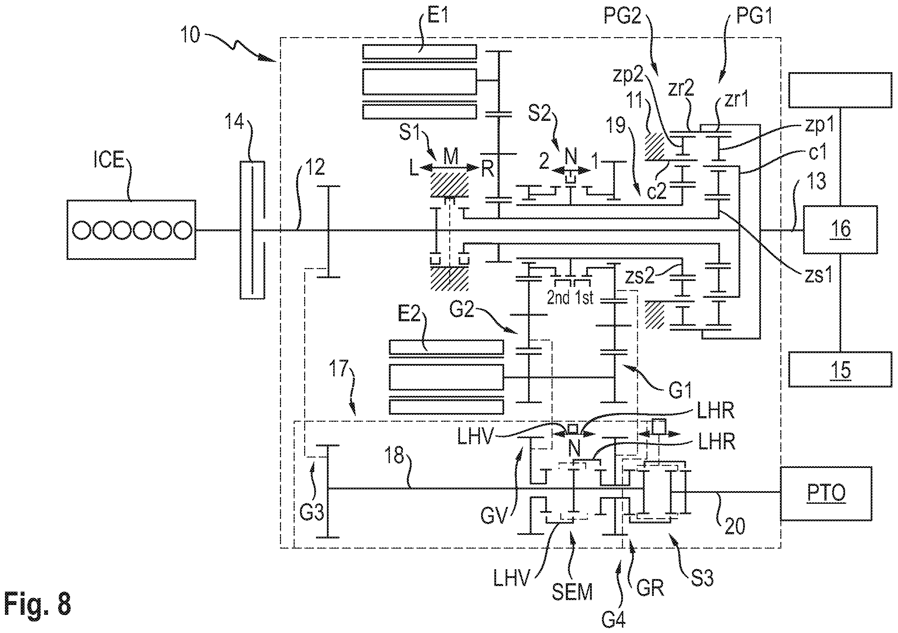

Weiters weist die in der Fig. 8 gezeigte Getriebeanordnung 10 eine Notfalleinrichtung 17 mit einem Notfall-Schaltelement SEM auf, über welches die Getriebeeingangswelle 12 zur Verwirklichung einer "Limp Home"- Funktion über eine Zwischenwelle 18 gleichzeitig mit dem ersten Planetenträger c1 und wahlweise über eine Vorwärts-Übersetzungsstufe GV - für Limp Home Vorwärts - mit dem zweiten Sonnenrad zs2 antriebsverbunden werden kann oder wahlweise über eine Rückwärts-Übersetzungsstufe GR - welche die Drehrichtung für Limp Home Rückwärts umkehrt - mit dem zweiten Sonnenrad zs2 antriebsverbunden werden kann.

In den in den Fig. 1, Fig. 2, Fig. 3, Fig. 5, Fig. 7 und Fig. 8 gezeigten Ausführungsvarianten weist jeweils das erste Schaltelement S1 drei Schaltstellungen, nämlich L, M und R auf, wobei in der linken Schaltstellung die Getriebeeingangswelle 12 blockiert und in der rechten Schaltstellung das erste Sonnenrad zs1 festgehalten ist. In der Mittelstellung M werden weder die Getriebeeingangswelle 12, noch das erste Sonnenrad zs1 gebremst und können sich frei drehen.

Weiters sind in Fig. 1, Fig. 2, Fig. 3, Fig. 4, Fig. 7 und Fig. 8 zweite Schaltelemente S2 vorgesehen, welche jeweils ebenfalls drei Schaltstellungen, nämlich 1, 2 und N aufweisen, wobei in der ersten Schaltstellung 1 die zweite Maschine über eine erste Übersetzungsstufe G1, und in der zweiten Schaltstellung 2 über eine zweite Übersetzungsstufe G2 mit dem zweiten Sonnenrad zs2 antriebsverbunden ist.

Weiters ist in den Ausführungsvarianten nach Fig. 1, Fig. 2 und Fig. 7 eine Notfalleinrichtung 17 mit einem Notfall-Schaltelement SE vorgesehen, mit welchem die Eingangswelle 12 zusätzlich zur Verbindung zum Planetenträger c1 über die Zwischenwelle 18 mit dem ersten Sonnenrad zs1 antriebsverbunden werden kann. Das Notfall-Schaltelement SE weist zwei Schaltstellungen, nämlich "OFF" und "ON" auf, wobei in der Schaltstellung "OFF" die "Limp-home"-Funktion deaktiviert und die direkte Verbindung zwischen der Getriebeeingangswelle 12 und dem ersten Sonnenrad zs1 unterbrochen ist. Durch Verschieben des Notfall-Schaltelementes SE wird die Antriebsverbindung zwischen der Getriebeeingangswelle 12 gleichzeitig mit dem ersten Planetenträger c1 und dem ersten Sonnenrad zs1 hergestellt und somit die "Limp home"-Funktion aktiviert. Die Aktivierung der "Limp home"-Funktion erfolgt beispielsweise im Falle eines Ausfalles der Steuerung für die elektrischen Maschinen E1, E2, wodurch eine Weiterfahrt des Fahrzeuges mit eingeschränkter Funktionalität möglich ist.

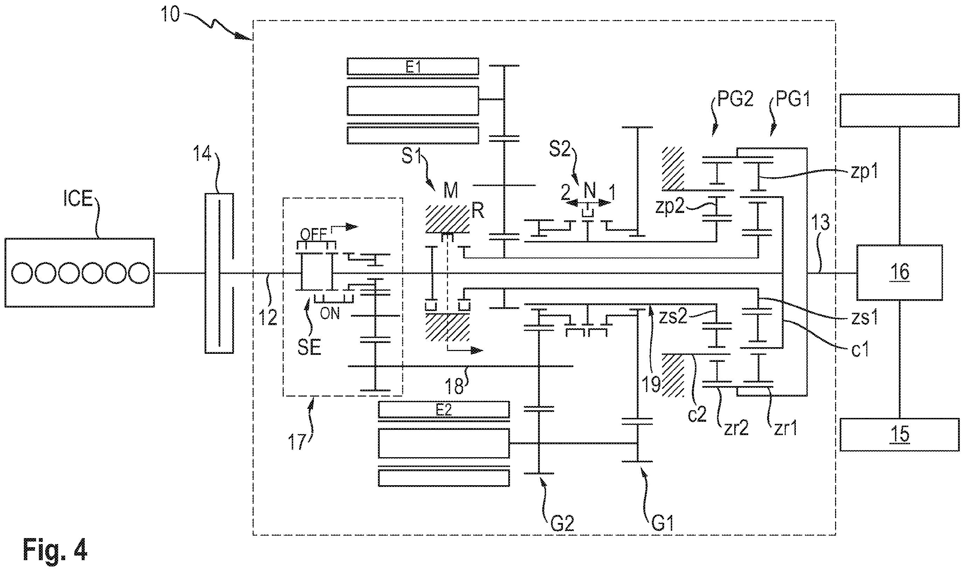

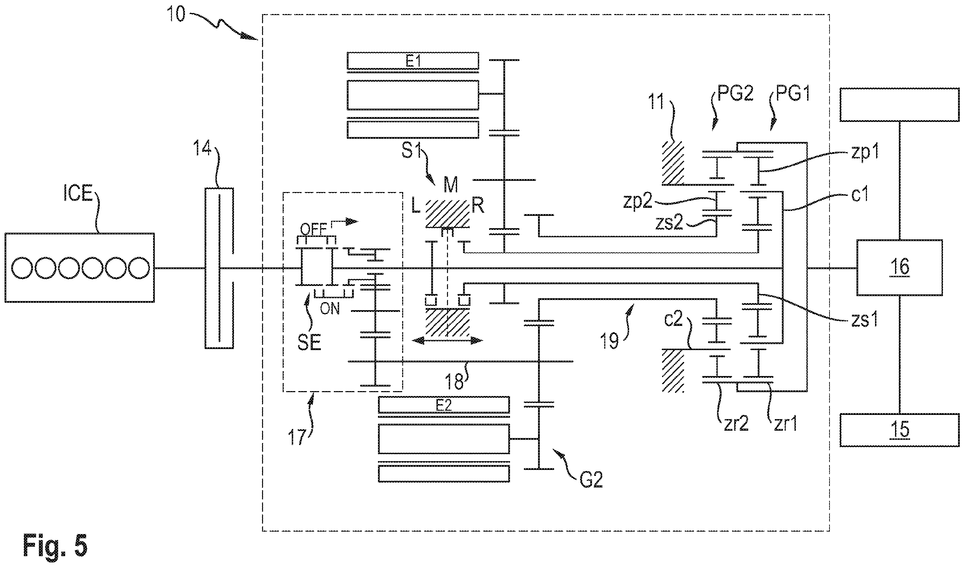

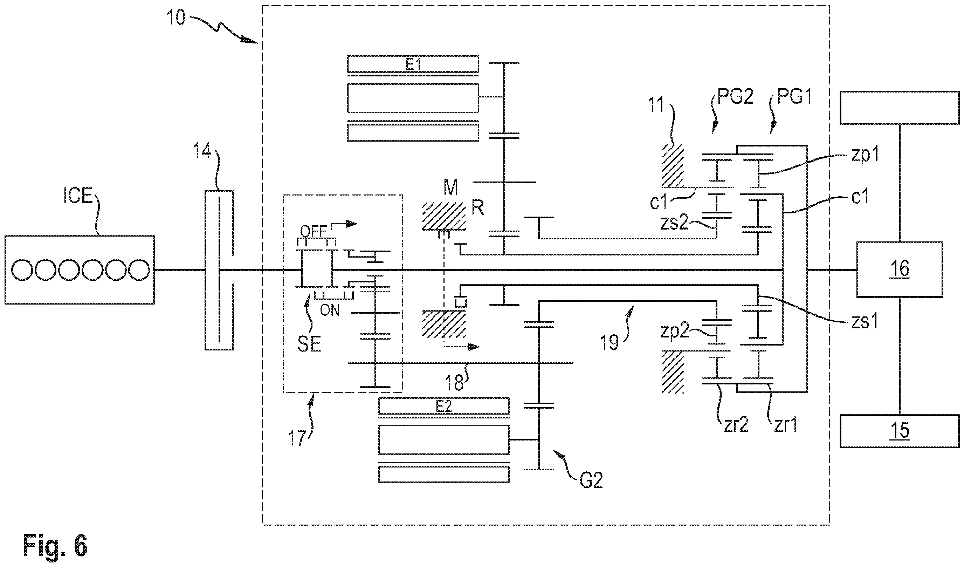

Die Fig. 3 bis Fig. 6 zeigen erfindungsgemäße Getriebeanordnungen 10, welche sich von dem in Fig. 1, Fig. 2 und Fig. 7 dargestellten Ausführungsbeispielen dadurch unterscheiden, dass durch das Notfall-Schaltelement SE die Getriebeeingangswelle 12 über die Zwischenwelle 18 nicht mit dem ersten Sonnenrad zs1, sondern mit dem zweiten Sonnenrad zs2 verbunden werden kann. In den Fig. 3 und Fig. 4 muss zusätzlich das zweite Schaltelement S2 in die Schaltstellung "1" oder die Schaltstellung "2" geschaltet werden, um die "Limp Home"-Funktion zu ermöglichen. Bei den konstruktiv einfacheren Ausführungen der Fig. 5 und Fig. 6 ist die Zwischenwelle 18, sowie die zweite elektrische Maschine E2 direkt mit dem zweiten Sonnenrad zs2 antriebsverbunden - ein zweites Schaltelement S2 zum Auswählen zwischen Übersetzungsstufen G1, G2 ist nicht vorgesehen.

Die Fig. 8 zeigt eine weitere erfindungsgemäße Getriebeanordnung 10, welche sich von den in Fig. 1 - Fig. 7 dargestellten Ausführungsbeispielen dadurch unterscheidet, das durch das Notfall-Schaltelement SEM die Getriebeeingangswelle 12 gleichzeitig mit dem ersten Planetenträger c1 und über die Zwischenwelle 18 wahlweise über die Vorwärts-Übersetzungsstufe GV - für Limp Home Vorwärts (Stellung LHV des Notfallschaltelementes SEM)- mit dem zweiten Sonnenrad zs2 antriebsverbunden werden kann oder wahlweise über eine Rückwärts-Übersetzungsstufe GR - welche die Drehrichtung für Limp Home Rückwärts (Stellung LHR des Notfallschaltelementes SEM) umkehrt - mit dem zweiten Sonnenrad zs2 antriebsverbunden werden kann.

In den Fig. 3, Fig. 4 und Fig. 8 muss zusätzlich das zweite Schaltelement S2 in die Schaltstellung "1" oder die Schaltstellung "2" geschaltet werden, um die "Limp Home"-Funktion zu ermöglichen. Bei den konstruktiv einfacheren Ausführungen der Fig. 5 und Fig. 6 ist die Zwischenwelle 18 sowie die zweite elektrische Maschine E2 direkt mit dem zweiten Sonnenrad zs2 antriebsverbunden - ein zweites Schaltelement S2 zum Auswählen zwischen Übersetzungsstufen G1, G2 ist nicht vorgesehen.

Die Fig. 4 und Fig. 6 zeigen weitere konstruktiv einfache Ausführungsvarianten, bei denen das erste Schaltelement S1 nur zwei Schaltstellungen aufweist, nämlich die Schaltstellung "R", bei der das erste Sonnenrad zs1 und die erste elektrische Maschine E1 blockiert sind, und die Schaltstellung "MR", bei der das erste Sonnenrad zs1 und die erste elektrische Maschine E1 frei drehbar sind.

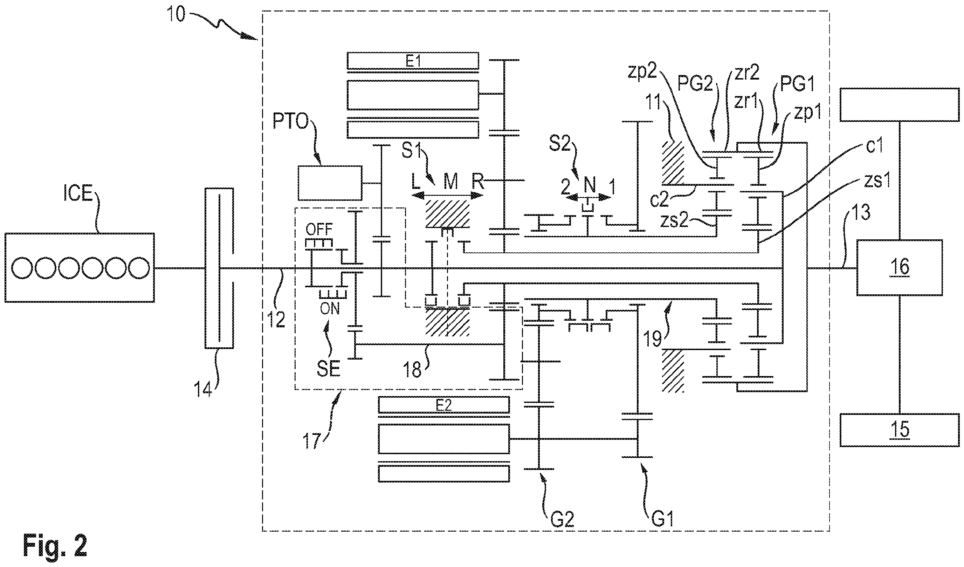

Weiters können verschiedene Varianten zur Realisierung des Nebenabtriebs PTO unabhängig von den Ausführungsvarianten dargestellt werden. Vorzugsweise wie bei der in Fig. 1 dargestellten Getriebeanordnung 10 kann optional ein elektrisch angetriebener Nebenabtrieb PTO verbaut sein. Vorzugsweise kann wie bei der in Fig. 2 gezeigten zweiten Ausführung ein mechanisch über die Getriebeeingangswelle 12 angetriebener Nebenabtrieb PTO vorgesehen werden.

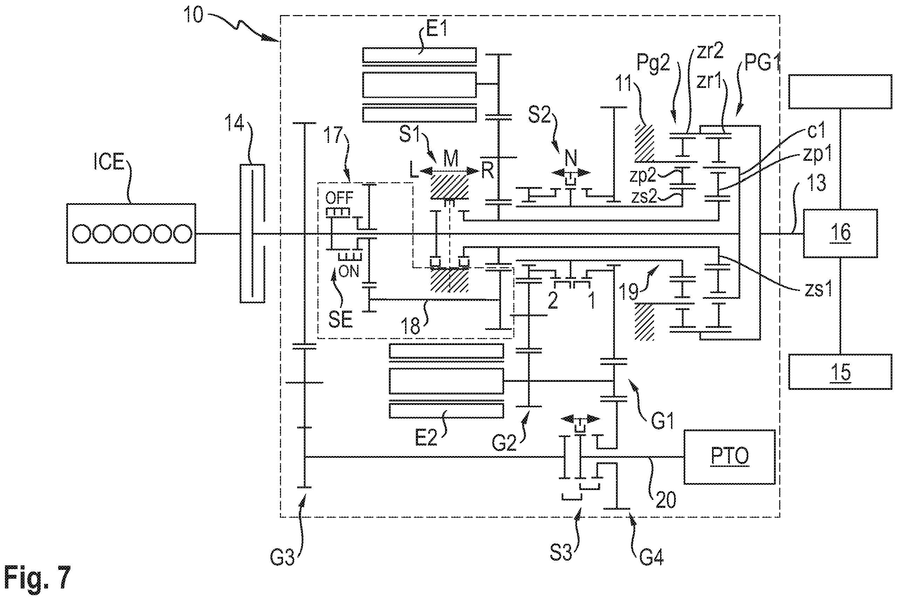

Vorzugsweise kann wie bei den in Fig. 7 und Fig. 8 gezeigten Ausführungsvarianten zur Realisierung des Nebenabtriebs PTO die Nebenabtriebswelle 20 über ein zusätzliches Schaltelement S3 - vorzugsweise wahlweise über eine Übersetzungsstufe G3 - mit der Getriebeeingangswelle 12 antriebsverbunden oder antriebsverbindbar werden oder vorzugsweise wahlweise über eine Übersetzungsstufe G4 mit der zweiten elektrischen Maschine E2 antriebsverbunden oder antriebsverbindbar werden.

Die in den Fig. 1 bis Fig. 8 dargestellten Getriebeanordnungen 10 ermöglichen folgende Betriebsmodi:

| | Betriebsmodus | Energiequelle | | | Schaltelemente | | | | Betriebsmodus dargestellt in Fig. |
|---|---|---|---|---|---|---|---|---|---|
| | | ICE | E1 | E2 | SE | SEM | S1 | S2 | |
| 1 | OD | + | BL | +, - | OFF | X | R | 2, N | 1-8 |
| 2 | eCVT1 | + | + | + | OFF | X | M | 1 | 1-4, 7, 8 |
| 3 | eCVT2 | + | + | + | OFF | X | M | 2 | 1-8 |
| 4 | EV1 | - | + | + | OFF | X | M | 1, 2 | 1-4, 7, 8 |
| 5 | EV2 | BL | + | + | OFF | X | L | 1, 2 | 1-3, 7, 8 |
| 6 | LH1V | + | + | - | ON | X | M | N | 1, 2, 7 |
| 7 | LH2V | + | - | + | ON | X | M, (R) | 1, 2 | 3-6 |
| 8 | LH3V | + | - | + | X | LHF | M | 2 | 8 |
| 9 | LH3R | + | - | + | X | LHR | M | 1 | 8 |
| 10 | CHM | + | + | + | OFF | N | M | (1), 2 | 1-8 |
| 11 | CHS | + | + | - | OFF | N | M | (1), 2, (N) | 1-8 |

In der Tabelle bedeuten: "+" aktivierte Maschine, "-" deaktivierte Maschine und "BL" blockierte Maschine. "X" bedeutet nicht vorhandenes Schaltelement. Die Schaltstellungen "OFF", "ON" des Notfallschaltelementes SE; "LHF", "N", "LHR" des Notfallschaltelementes SEM; "L", "M", "R" des ersten Schaltelementes S1; und "1", "N", "2" des zweiten Schaltelementes S2 entsprechen je nach Darstellung den in den Fig. 1 bis Fig. 8 angedeuteten Schaltpositionen der Schaltelemente SE, SEM, S1, S2. In der Schaltstellung L des ersten Schaltelementes S1 wird die Brennkraftmaschine ICE, in der Schaltstellung R des ersten Schaltelementes S1 die erste elektrische Maschine S1 blockiert. In der Mittelstellung M können sowohl die Brennkraftmaschine ICE, als auch die erste elektrische Maschine E1 Antriebsdrehmoment zur Verfügung stellen. In der Position "N" ist die zweite elektrische Maschine E2 abgekoppelt. In den Schaltstellungen 1 und 2 kann Drehmoment über unterschiedliche Übersetzungsstufen G1, G2 durch die zweite elektrische Maschine E2 in den Antriebsstrang 19 der Getriebeanordnung 10 eingebracht werden. In der Stellung "N" ist die zweite elektrische Maschine E2 vom restlichen Getriebe entkoppelt.

Zeile 1 der Tabelle zeigt den Betriebsmodus OD (Overdrive), welcher insbesondere im oberen Geschwindigkeitsbereich eingesetzt werden kann, um Kraftstoffverbrauch, Emissionen und Lärmpegel zu verringern. Dabei ist bevorzugt nur die Brennkraftmaschine ICE in Betrieb und kann bei optimaler Drehzahl betrieben werden. Die zweite elektrische Maschine E2 kann mechanisch abgekoppelt werden (Position "N" des zweiten Schaltelementes S2) und die erste elektrische Maschine E1 blockiert werden (Position "R" des ersten Schaltelementes S1). Dadurch können Verluste durch die elektrischen Maschinen E1 und E2 vermieden werden. Bei Bedarf kann die zweite elektrische Maschine E2 als Parallelhybrid-Antrieb dazu geschalten werden (Positionen "1" oder "2" des zweiten Schaltelementes S2), um ein zusätzliches Antriebsdrehmoment zu erzeugen.

Zeile 2 der Tabelle zeigt den Betriebsmodus eCVT1, bei dem sowohl die Brennkraftmaschine, als auch die erste elektrische Maschine E1 und zweite elektrische Maschine E2 in Betrieb sind, wobei die zweite elektrische Maschine E2 über die erste Übersetzungsstufe G1 angekoppelt ist. Durch gezielte Ansteuerung der beiden elektrischen Maschinen E1, E2 kann eine elektrisch unterstützte kontinuierlich variable Übersetzung (eCVT) zwischen der Brennkraftmaschine ICE und den Antriebsrädern 15 erzielt werden. Dieser Betriebsmodus eCVT1 ermöglicht ein hohes Antriebsdrehmoment bei hohem Übersetzungsverhältnis der ersten Übersetzungsstufe G1.

Zeile 3 zeigt analog zum Betriebsmodus eCVT1 den Betriebsmodus eCVT2, bei dem sowohl die Brennkraftmaschine als auch die erste elektrische Maschine E1 und zweite elektrische Maschine E2 in Betrieb sind, wobei die zweite elektrische Maschine E2 über die zweite Übersetzungsstufe G2 angekoppelt ist. Dieser Betriebsmodus eCVT2 ermöglicht hohe Antriebsdrehzahlen bei niedrigem Übersetzungsverhältnis der zweiten Übersetzungsstufe G2.

Zeile 4 zeigt den rein elektrischen Betriebsmodus EV1, bei dem die Brennkraftmaschine ICE ausgeschaltet, aber nicht blockiert ist (das erste Schaltelement befindet sich in der Schaltposition "M"). Sowohl die erste elektrische Maschine E1, als auch die zweite elektrische Maschine E2 sind aktiviert. Die zweite elektrische Maschine E2 gibt Antriebsdrehmoment für den Abtrieb ab, wobei die erste elektrische Maschine E1 oder wahlweise die ausgekuppelte Brennkraftmaschine ICE mit einer ihr aufgezwungenen Drehzahl mitlaufen kann. Dieser Betriebsmodus wird vorzugsweise nur für den Antrieb in der Ebene oder bei kleinen Steigungen verwendet.

Zeile 5 zeigt den rein elektrischen Betriebsmodus EV2, bei dem die Brennkraftmaschine ICE blockiert ist (das erste Schaltelement S1 befindet sich in der Schaltposition "L"). Sowohl die erste elektrische Maschine E1, als auch die zweite elektrische Maschine E2 sind aktiviert. Beide elektrische Maschinen E1 und E2 werden für den Antrieb verwendet.

Zeile 6 zeigt den Betriebsmodus LH1V ("Limp home"), bei dem der Antrieb des Fahrzeuges nur über die Brennkraftmaschine ICE erfolgt. Das Notfall-Schaltelement SE befindet sich in der Stellung "ON", wodurch die Getriebeeingangswelle 12 zusätzlich zur Verbindung zum Planetenträger c1 mit dem ersten Sonnenrad zs1 antriebsverbunden ist. Das erste Schaltelement S1 befindet sich in der Mittelposition "M", das zweite Schaltelement S2 in der Neutralstellung "N". Die erste elektrische Maschine E1 und die zweite elektrische Maschine E2 können deaktiviert sein.

Zeile 7 zeigt den Betriebsmodus LH2V ("Limp home"), bei dem der Antrieb des Fahrzeuges nur über die Brennkraftmaschine ICE erfolgt. Das Notfall-Schaltelement SE befindet sich in der Stellung "ON", wodurch die Getriebeeingangswelle 12 mit dem zweiten Sonnenrad zs2 antriebsverbunden ist. Das erste Schaltelement S1 befindet sich in der Mittelposition "M", das zweite Schaltelement S2 in der Position "1" oder "2". Die erste elektrische Maschine E1 kann deaktiviert sein und die zweite elektrische Maschine E2 kann mit einer ihr aufgezwungenen Drehzahl mitdrehen.

Zeile 8 zeigt den Betriebsmodus LH3V ("Limp home Vorwärts"), bei dem der Antrieb des Fahrzeuges nur über die Brennkraftmaschine ICE erfolgt. Das Notfall-Schaltelement SEM befindet sich in der Stellung "LHF", wodurch die Getriebeeingangswelle 12 zusätzlich zur Verbindung zum Planetenträger c1 mit dem zweiten Sonnenrad zs2 antriebsverbunden ist. Das erste Schaltelement S1 befindet sich in der Mittelposition "M", das zweite Schaltelement S2 in der Stellung "2". Die erste elektrische Maschine E1 und die zweite elektrische Maschine E2 können deaktiviert sein.

Zeile 9 zeigt den Betriebsmodus LH3R ("Limp home Rückwärts"), bei dem der Antrieb des Fahrzeuges nur über die Brennkraftmaschine ICE erfolgt. Das Notfall-Schaltelement SEM befindet sich in der Stellung "LHR", wodurch die Getriebeeingangswelle 12 zusätzlich zur Verbindung zum Planetenträger c1 mit dem zweiten Sonnenrad zs2 antriebsverbunden ist. Das erste Schaltelement S1 befindet sich in der Mittelposition "M", das zweite Schaltelement S2 in der Stellung "1". Die erste elektrische Maschine E1 und die zweite elektrische Maschine E2 können deaktiviert sein.

Die Zeilen 10 und 11 zeigen die Betriebsmodi CHM und CHS, für das Laden der Fahrzeugbatterie, entweder während des Fahrbetriebes (Betriebsmodus CHM) oder während des Stillstandes des Fahrzeuges (Betriebsmodus CHS). Dabei sind die Brennkraftmaschine ICE und die erste elektrische Maschine E1 aktiviert. Im Betriebsmodus CHM ist auch die zweite elektrische Maschine E2 aktiviert und entweder über die erste Übersetzungsstufe G1 oder die zweite Übersetzungsstufe G2 mit dem zweiten Sonnenrad zs2 verbunden. Im Betriebsmodus CHS ist die zweite elektrische Maschine E2 deaktiviert und entweder über die erste Übersetzungsstufe G1 oder die zweite Übersetzungsstufe G2 an den Antriebsstrang 19 der Getriebeanordnung 10 angebunden (Schaltstellung "1" oder "2" des zweiten Schaltelementes S2) oder von diesem getrennt (Schaltstellung "N" des zweiten Schaltelementes S2).

## Patentansprüche

1. Getriebeanordnung (10) für ein Hybridfahrzeug, mit einem Gehäuse (11), mit einer Getriebeeingangswelle (12) und zumindest einer Getriebeausgangswelle (13), die zum Antrieb von Antriebsrädern (15) dient, mit einem ersten Planetengetriebesatz (PG1) mit einem ersten Sonnenrad (zs1), einem ersten Hohlrad (zr1) und einem ersten Planetenträger (c1) für einen mit dem ersten Sonnenrad (zs1) und dem ersten Hohlrad (zr1) im Zahneingriff stehenden ersten Planetenradsatz (zp1), mit einem zweiten Planetengetriebesatz (PG2) mit einem zweiten Sonnenrad (zs2), einem zweiten Hohlrad (zr2) und einem zweiten Planetenträger (c2) für einen mit dem zweiten Sonnenrad (zs2) und dem zweiten Hohlrad (zr2) im Zahneingriff stehenden zweiten Planetenradsatz (zp2), wobei die Getriebeeingangswelle (12) mit dem ersten Planetenträger (c1) drehfest verbunden oder verbindbar ist und das erste Hohlrad (zr1) und zweite Hohlrad (zr2) permanent miteinander und mit der Getriebeausgangswelle (13) drehfest verbunden sind, mit einer ersten elektrischen Maschine (E1) und einer zweiten elektrischen Maschine (E2), wobei die erste elektrische Maschine (E1) permanent mit dem ersten Sonnenrad (zs1) antriebsverbunden und die zweite elektrische Maschine (E2) in zumindest einem Betriebsmodus mit dem zweiten Sonnenrad (zs2) antriebsverbunden ist, und wobei das erste Sonnenrad (zs1) über ein erstes Schaltelement (S1) mit dem Gehäuse (11) verbindbar ist, wobei der zweite Planetenträger (c2) fest mit dem Gehäuse (11) verbunden ist und die zweite elektrische Maschine (E2) mit dem zweiten Sonnenrad (zs2) antriebsverbunden oder antriebsverbindbar ist, **dadurch gekennzeichnet, dass**
• in einem Notfall-Modus (LH) der Getriebeanordnung (10) die Getriebeeingangswelle (12) über ein Notfall-Schaltelement (SE) zusätzlich zu einer drehfesten Verbindung zum ersten Planetenträger (c1) mit dem ersten Sonnenrad (zs1) antriebsverbindbar ist,
oder dass
• in einem Notfall-Modus (LH) der Getriebeanordnung (10) die Getriebeeingangswelle (12) über ein Notfall-Schaltelement (SE) bei getrennter Verbindung zum ersten Planetenträger (c1) mit dem zweiten Sonnenrad (zs2) antriebsverbindbar ist,
oder dass
• in einem Notfall-Modus (LH) der Getriebeanordnung (10) die Getriebeeingangswelle (12) über ein Notfall-Schaltelement (SEM) zusätzlich zu einer drehfesten Verbindung zum ersten Planetenträger (c1) wahlweise über eine erste Vorwärtsübersetzungsstufe (GV) mit dem zweiten Sonnenrad (zs2) oder über eine Rückwärts-Übersetzungsstufe (GR) - welche die Drehrichtung umkehrt - mit dem zweiten Sonnenrad (zs2) antriebsverbindbar ist.

2. Getriebeanordnung (10) nach Anspruch 1, **dadurch gekennzeichnet, dass** die zweite elektrische Maschine (E2) über ein zweites Schaltelement (S2) - vorzugsweise wahlweise über eine erste (G1) oder zweite Übersetzungsstufe (G2) - mit dem zweiten Sonnenrad (zs2) antriebsverbindbar ist.

3. Getriebeanordnung (10) nach Anspruch 1 oder 2, **dadurch gekennzeichnet, dass** die zweite elektrische Maschine (E2) über zumindest eine Übersetzungsstufe (G1, G2) mit dem zweiten Sonnenrad (zs2) antriebsverbunden oder antriebsverbindbar ist.

4. Getriebeanordnung (10) nach einem der Ansprüche 1 bis 3, **dadurch gekennzeichnet, dass** die Getriebeeingangswelle (12) - vorzugsweise über das erste Schaltelement (S1) - mit dem Gehäuse (11) verbindbar ist.

5. Getriebeanordnung (10) nach einem der Ansprüche 1 bis 4, **dadurch gekennzeichnet, dass** die Getriebeausgangswelle (13) koaxial zur Getriebeeingangswelle (12) angeordnet ist.

6. Getriebeanordnung (10) nach einem der Ansprüche 1 bis 5, **dadurch gekennzeichnet, dass** die erste elektrische Maschine (E1) und die zweite elektrische Maschine (E2) achsversetzt zueinander, vorzugsweise auch achsversetzt in Bezug zur Getriebeeingangswelle (12) und/oder Getriebeausgangswelle (13) - angeordnet sind.

7. Getriebeanordnung (10) nach einem der Ansprüche 1 bis 6, **dadurch gekennzeichnet, dass** die Getriebeeingangswelle (12) - vorzugsweise über eine Übersetzungsstufe (G1, G2) - mit einer Nebenabtriebswelle (20) antriebsverbunden oder antriebsverbindbar ist.

8. Getriebeanordnung (10) nach einem der Ansprüche 1 bis 7, **dadurch gekennzeichnet, dass** eine Nebenabtriebswelle (20) über ein Schaltelement (S3) - vorzugsweise über eine Übersetzungsstufe G3 - mit der Getriebeeingangswelle (12) antriebsverbunden oder antriebsverbindbar ist oder - vorzugsweise über eine Übersetzungsstufe (G4) - mit der zweiten elektrischen Maschine (E2) antriebsverbunden oder antriebsverbindbar ist.

9. Getriebeanordnung nach einem der Ansprüche 1 bis 8, **dadurch gekennzeichnet, dass** sowohl der erste (PG1), als auch der zweite Planetenradsatz (PG2) als einfaches Minusgetriebe ausgebildet sind.

10. Verfahren zum Betreiben eines Hybridfahrzeuges mit einer Getriebeanordnung (10) nach einem der Ansprüche 1 bis 9, wobei in einem Overdrive-Modus (OD) des Hybridfahrzeuges die erste elektrische Maschine (E1) blockiert wird, wobei das erste Sonnenrad (zs1) über das erste Schaltelement (S1) mit dem Gehäuse (11) verbunden wird, **dadurch gekennzeichnet, dass**
• in zumindest einem Notfall-Modus (LH) die Getriebeeingangswelle (12) zusätzlich zu einer drehfesten Verbindung zum ersten Planetenträger (c1) mit dem ersten Sonnenrad (zs1) antriebsverbunden wird,
oder dass
• in zumindest einem Notfall-Modus (LH) die Getriebeeingangswelle (12) bei getrennter Verbindung zum ersten Planetenträger (c1) mit dem zweiten Sonnenrad (zs2) antriebsverbunden wird,
oder dass
• in einem Notfall-Modus (LH) der Getriebeanordnung (10) die Getriebeeingangswelle (12) über ein Notfall-Schaltelement (SEM) zusätzlich zu einer drehfesten Verbindung zum Planetenträger (c1) wahlweise über eine erste Vorwärtsübersetzungsstufe (GV) mit dem zweiten Sonnenrad (zs2) oder über eine Rückwärts-Übersetzungsstufe (GR) - welche die Drehrichtung umkehrt - mit dem zweiten Sonnenrad (zs2) antriebsverbunden wird.

11. Verfahren nach Anspruch 10, zum Betreiben eines Hybridfahrzeugs mit einer Getriebeanordnung (10) nach Anspruch 2, **dadurch gekennzeichnet, dass** im Overdrive-Modus (OD) die zweite elektrische Maschine (E2) über das zweite Schaltelement (S2) vom Antriebsstrang (19) getrennt wird.

## Claims

1. Transmission arrangement (10) for a hybrid vehicle, comprising a housing (11), a transmission input shaft (12) and at least one transmission output shaft (13) used for driving drive wheels (15), a first planetary transmission set (PG1) having a first sun gear (zs1), a first ring gear (zr1) and a first planet carrier (c1) for a first planetary gear set (zp1) meshing with the first sun gear (zs1) and the first ring gear (zr1), a second planetary transmission set (PG2) having a second sun gear (zs2), a second ring gear (zr2) and a second planet carrier (c2) for a second planetary gear set (zp2) meshing with the second sun gear (zs2) and the second ring gear (zr2), wherein the transmission input shaft (12) is connected or connectable in a rotationally fixed manner to the first planet carrier (c1), and the first ring gear (zr1) and second ring gear (zr2) are permanently connected to each other and to the transmission output shaft (13) in a rotationally fixed manner, further comprising a first electric machine (E1) and a second electric machine (E2), wherein the first electric machine (E1) is permanently drive-connected to the first sun gear (zs1) and the second electric machine (E2) is drive-connected to the second sun gear (zs2) in at least one operating mode, and wherein the first sun gear (zs1) can be connected to the housing (11) via a first switching element (S1), wherein the second planet carrier (c2) is fixedly connected to the housing (11) and the second electric machine (E2) is drive-connected or can be drive-connected to the second sun gear (zs2), **characterised in that**
• in an emergency mode (LH) of the transmission arrangement (10), the transmission input shaft (12) can be drive-connected to the first sun gear (zs1) via an emergency switching element (SE) in addition to a rotationally fixed connection to the first planet carrier (c1),
or **in that**
• in an emergency mode (LH) of the transmission arrangement (10), the transmission input shaft (12) can be drive-connected to the second sun gear (zs2) via an emergency switching element (SE) with a severed connection to the first planet carrier (c1),
or **in that**
• in an emergency mode (LH) of the transmission arrangement (10), the transmission input shaft (12) can be drive-connected via an emergency switching element (SEM) either in addition to a rotationally fixed connection to the planet carrier (c1) selectively via a first forward transmission stage (GV) to the second sun gear (zs2) or via a reverse transmission stage (GR) - which reverses the direction of rotation - to the second sun gear (zs2).

2. Transmission arrangement (10) according to claim 1, **characterised in that** the second electric machine (E2) can be drive-connected to the second sun gear (zs2) via a second switching element (S2), preferably selectively via a first transmission stage (G1) or second transmission stage (G2).

3. Transmission arrangement (10) according to claim 1 or 2, **characterised in that** the second electric machine (E2) is drive-connected or can be drive-connected to the second sun gear (zs2) via at least one transmission stage (G1, G2).

4. Transmission arrangement (10) according to one of claims 1 to 3, **characterised in that** the transmission input shaft (12) can be connected to the housing (11), preferably via the first switching element (S1).

5. Transmission arrangement (10) according to one of claims 1 to 4, **characterised in that** the transmission output shaft (13) is arranged coaxially to the transmission input shaft (12).

6. Transmission arrangement (10) according to one of claims 1 to 5, **characterised in that** the first electric machine (E1) and the second electric machine (E2) are arranged axially offset relative to one another, preferably also axially offset relative to the transmission input shaft (12) and/or transmission output shaft (13).

7. Transmission arrangement (10) according to one of claims 1 to 6, **characterised in that** the transmission input shaft (12) - preferably via a transmission stage (G1, G2) - is drive-connected or can be drive-connected to a power take-off shaft (20).

8. Transmission arrangement (10) according to one of claims 1 to 7, **characterised in that** a power take-off shaft (20) is drive-connected or can be drive-connected to the transmission input shaft (12) via a switching element (S3) - preferably via a transmission stage G3 - or is drive-connected or can be drive-connected to the second electric machine (E2) - preferably via a transmission stage (G4).

9. Transmission arrangement according to one of claims 1 to 8, **characterised in that** both the first (PG1) and the second planetary gear set (PG2) are designed as simple minus transmissions.

10. Method for operating a hybrid vehicle having a transmission arrangement (10) according to one of claims 1 to 9, wherein in an overdrive mode (OD) of the hybrid vehicle the first electric machine (E1) is blocked, wherein the first sun gear (zs1) is connected to the housing (11) via a first switching element (S1), **characterised in that**
• in at least one emergency mode (LH), the transmission input shaft (12) is drive-connected to the first sun gear (zs1) in addition to a rotationally fixed connection to the first planet carrier (c1),
or **in that**
• in at least one emergency mode (LH), the transmission input shaft (12) is drive-connected to the second sun gear (zs2) with a severed connection to the first planet carrier (c1),
or **in that**
• in an emergency mode (LH) of the transmission arrangement (10), the transmission input shaft (12) can be drive-connected via an emergency switching element (SEM) either in addition to a rotationally fixed connection to the planet carrier (c1) selectively via a first forward transmission stage (GV) to the second sun gear (zs2) or via a reverse transmission stage (GR) - which reverses the direction of rotation - to the second sun gear (zs2).

11. Method according to claim 10, for operating a hybrid vehicle having a transmission arrangement (10) according to claim 2, **characterised in that** in overdrive mode (OD) the second electric machine (E2) is disconnected from the drive train (19) via the second switching element (S2).

## Revendications

1. Système de transmission (10) pour un véhicule hybride comprenant un carter (11), un arbre d'entrée de transmission (12) et au moins un arbre de sortie de transmission (13) pour entraîner des roues motrices (15), un premier jeu de satellites (PG1) comprenant une première roue solaire (zs1), une première couronne (zr1) et un premier porte-satellites (c1) pour un premier jeu de satellites (zp1) en prise avec la première roue solaire (zs1) et la première couronne (zr1), un second engrenage planétaire (PG2) avec une seconde roue solaire (zs2), une seconde couronne (zr2) et un second porte-satellites (c2) pour un second jeu de satellites (zp2) en prise avec la seconde roue solaire (zs2) et la seconde couronne (zr2),
l'arbre d'entrée de transmission (12) étant solidaire en rotation du premier porte-satellites (c1) ou pouvant être relié à celui-ci et la première couronne (zr1) et la seconde couronne (zr2) sont reliées solidairement en rotation, de manière permanente entre elles et avec l'arbre de sortie et de transmission (13), un premier moteur électrique (E1) et un second moteur électrique (E2),
le premier moteur électrique (E1) étant relié en transmission, en permanence avec la première roue solaire (zs1) et le second moteur électrique (E2) pouvant être relié en entraînement pour au moins un mode de fonctionnement avec la seconde roue solaire (zs2), et
la première roue solaire (zs1) peut être reliée au carter (11) par un premier élément de commutation (S1),
- le second porte-satellites (c2) étant relié solidairement au carter (11) et le second moteur électrique (E2) étant relié ou pouvant être relié en entraînement avec la seconde roue solaire (zs2),
système **caractérisé en ce que**
* dans un premier mode de secours (LH) du système de transmission (10), l'arbre d'entrée de transmission (12) peut être relié dans le sens de l'entraînement par un élément de commutation de secours (SE), en plus d'une liaison solidaire en rotation, pour le premier porte-satellites (c1) avec la première roue solaire (zs1),
ou
* dans un second mode de secours (LH) du système de transmission (10), l'arbre d'entrée de transmission (12) peut être relié dans le sens de l'entraînement par un élément de commutation de secours (SE) avec la seconde roue solaire (zs2), la liaison étant coupée avec le premier porte-satellites (c1),
ou
* dans un mode de secours (LH) du système de transmission (10), l'arbre d'entrée de transmission (12) peut être relié dans le sens de l'entraînement par un élément de commutation de secours (SEM) en plus pour une liaison solidaire en rotation avec le premier porte-satellites (c1), au choix par un premier rapport de transmission de marche avant (GV) avec la seconde roue solaire (zs2) ou par un rapport de transmission de marche arrière (GR) (qui inverse le sens de rotation) avec la seconde roue solaire (zs2).

2. Système de transmission (10) selon la revendication 1,
**caractérisé en ce que**
le second moteur électrique (E2) peut être relié dans le sens de l'entraînement par un second élément de commutation (S2) de préférence sélectivement par un premier ou un second rapport de transmission (G1) ou (G2) avec la seconde roue solaire (zs2).

3. Système de transmission (10) selon la revendication 1 ou 2,
**caractérisé en ce que**
le second moteur électrique (E2) est relié ou peut être relié dans le sens de l'entraînement par au moins un rapport (G1, G2) avec la seconde roue solaire (zs2).

4. Système de transmission (10) selon l'une des revendications 1 à 3,
**caractérisé en ce que**
l'arbre d'entrée de transmission (12) peut être relié au carter (11) de préférence par le premier élément de commutation (S1).

5. Système de transmission (10) selon l'une des revendications 1 à 4,
**caractérisé en ce que**
l'arbre de sortie de transmission (13) est coaxial à l'arbre d'entrée de transmission (12).

6. Système de transmission (10) selon l'une des revendications 1 à 5,
**caractérisé en ce que**
le premier moteur électrique (E1) et le second moteur électrique (E2) sont décalés axialement, de préférence également par rapport à l'arbre d'entrée de transmission (12) et/ou l'arbre de sortie de transmission (13).

7. Système de transmission (10) selon l'une des revendications 1 à 6,
**caractérisé en ce que**
l'arbre d'entrée de transmission (12) est relié ou peut être relié dans le sens de l'entraînement à un arbre de sortie auxiliaire (20), de préférence, par l'intermédiaire d'un rapport de transmission (G1, G2).

8. Système de transmission (10) selon l'une des revendications 1 à 7,
**caractérisé en ce que**
un arbre de sortie auxiliaire (20) est relié ou peut être relié dans le sens de l'entraînement à l'arbre d'entrée de transmission (12) par un élément de commutation (S3), de préférence par un rapport de transmission G3 ou, de préférence, par un rapport de transmission (G4) avec le second moteur électrique (E2).

9. Système de transmission (10) selon l'une des revendications 1 à 8,
**caractérisé en ce que**
à la fois le premier jeu planétaire (PG1) et le second jeu planétaire (PG2) sont réalisés comme une simple transmission négative.

10. Procédé de gestion d'un véhicule hybride comprenant un système de transmission (10) selon l'une des revendications 1 à 9,
selon lequel
en mode overdrive (OD) du véhicule hybride, la première machine électrique (E1) est bloquée, la première roue solaire (zs1) étant reliée par le premier élément de commutation (S1) au carter (11),
procédé **caractérisé en ce que**
* dans au moins un mode de secours (LH), l'arbre d'entrée de transmission (12) est en plus relié à la première roue solaire (zs1) pour une liaison solidaire en rotation avec le premier porte-satellite (c1),
ou
* dans au moins un mode de secours (LH), l'arbre d'entrée de transmission (12) est relié dans le sens de l'entraînement à la seconde roue solaire (zs2), la liaison étant coupée avec le premier porte-satellites (c1),
ou
* dans un mode de secours (LH) du système de transmission (10), l'arbre d'entrée de transmission (12) peut être relié en plus par un élément de commutation de secours (SME) pour avoir une liaison solidaire en rotation avec le porte-satellites (c1), au choix par un premier rapport de marche avant (GV) avec la seconde roue solaire (zs2) ou par un rapport de transmission de marche arrière (GR) avec la seconde roue solaire (zs2), ce rapport inversant le sens de rotation.

11. Procédé selon la revendication 10,
pour la gestion d'un véhicule hybride équipé d'un système de transmission (10) selon la revendication 2,
**caractérisé en ce que**
en mode overdrive (OD), le second moteur électrique (E2) est séparé de la ligne de transmission (19) par le second élément de commutation (S2).
